# EUROPEAN PATENT SPECIFICATION

(11) **EP 4 512 946 B1**
(45) Date of publication and mention of the grant of the patent: **27.05.2026**
(21) Application number: 23791707.5
(22) Date of filing: 07.04.2023
(51) Int. Cl.: D03D 11/00, B29B 15/12, B29C 70/16, B29C 70/48, D03D 1/00, D03D 15/587, B29K 105/08, D03D 13/00, B29C 70/22, B29B 11/16

(54) **FIBER STRUCTURE AND FIBER-REINFORCED COMPOSITE MATERIAL**
FASERSTRUKTUR UND FASERVERSTÄRKTER VERBUNDSTOFF
STRUCTURE DE FIBRE ET MATÉRIAU COMPOSITE RENFORCÉ DE FIBRES

(30) Priority: 22.04.2022 JP 2022071036
(43) Date of publication of application: 26.02.2025
(73) Proprietor: Kabushiki Kaisha Toyota Jidoshokki, Kariya-shi, Aichi 448-8671 (JP)
(72) Inventor: MORI, Kohei, Kariya-shi Aichi 448-8671 (JP)
(74) Representative: TBK
(86) International application number: PCT/JP2023/014409
(87) International publication number: WO 2023/204058

(56) References cited:
- EP-A1- 3 653 769
- WO-A1-2019/012983
- JP-A- 2017 106 128
- JP-A- 2018 066 086
- JP-A- 2018 127 732

## Description

### TECHNICAL FIELD

The present disclosure relates to a fiber structure and a fiber-reinforced composite material.

### BACKGROUND ART

For example, a fiber structure described in Patent Literature 1 includes multiple first yarns each having a yarn main axis extending in a first direction, and multiple second yarns each having a yarn main axis extending in a second direction orthogonal to the first direction. The first yarns are arranged in the second direction. The second yarns are arranged in the first direction. Additionally, the fiber structure described in Patent Literature 1 includes thermofusible yarns that contain thermofusible fibers. By fusing the thermofusible yarns at intersections of the first and second yarns, the first and second yarns are prevented from being displaced in the fiber structure. Patent Literature 2 discloses the preamble of claim 1.

### CITATION LIST

### Patent Literature

Patent Literature 1: Japanese Laid-Open Patent Publication No. 2011-58119
Patent Literature 2: WO2019/012983A1

### SUMMARY OF INVENTION

### Technical Problem

It is desirable to suppress fraying of the second yarns from the ends of the fiber structure in the first direction. For example, fraying of the second yarns can be suppressed by providing thermofusible yarns described in Patent Literature 1 at the ends of the fiber structure in the first direction and fusing these thermofusible yarns to the first and second yarns. However, this approach requires an additional step of fusing the thermofusible yarns to the first and second yarns, in addition to the weaving process used to produce the fiber structure. This results in an increase in the number of steps involved in manufacturing the fiber structure. Therefore, it is desirable to suppress fraying from the ends of the fiber structure while minimizing the increase in the number of steps required for the manufacture of the fiber structure.

### Solution to Problem

In one general aspect of the present disclosure, a fiber structure includes multiple fiber layers stacked in a stacking direction, and multiple interlayer binding yarns binding the multiple fiber layers in the stacking direction. The fiber layers include multiple first yarn layers and one or more second yarn layers located between the first yarn layers in the stacking direction. Each of the first yarn layers includes multiple first yarns each having a yarn main axis extending in a first direction. The first yarns are arranged in a second direction orthogonal to the first direction. One of the first yarn layers is located at each of opposite ends of the fiber structure in the stacking direction. Each of the second yarn layers includes multiple second yarns each having a yarn main axis extending in the second direction. The second yarns are arranged in the first direction without interlacing with the first yarns. Each of the interlayer binding yarns is adjacent to one of the second yarns in the first direction, has a yarn main axis extending in the second direction, and is engaged with the first yarns of the first yarn layers located at the opposite ends of the fiber structure in the stacking direction. The fiber structure further includes a central region including a center of the fiber structure in the first direction, and two end regions respectively including opposite ends of the fiber structure in the first direction. Each of the end regions is adjacent to the central region in the first direction. The second yarns include multiple end second yarns located at an end of the central region in the first direction. Each of the second yarn layers includes the end second yarns. Each of the central region and the two end regions includes the interlayer binding yarns. The interlayer binding yarns located in each of the end regions include the interlayer binding yarn located at an endmost position in the first direction among the interlayer binding yarns included in the fiber structure, and two of the interlayer binding yarns that pass through mutually different paths in a cross section of the fiber structure orthogonal to the first direction, so as to interlace with the first yarns. A pitch in the first direction between the interlayer binding yarns in the end regions is smaller than a pitch in the first direction between the interlayer binding yarns in the central region.

In another general aspect of the present disclosure, a fiber-reinforced composite material includes the above-described fiber structure and a matrix material impregnated into the fiber structure.

### BRIEF DESCRIPTION OF DRAWINGS

Fig. 1 is a perspective view showing a fiber-reinforced composite material according to an embodiment.
Fig. 2 is a perspective view showing a fiber structure according to the embodiment.
Fig. 3 is a top view of the fiber structure shown in Fig. 2.
Fig. 4 is an end view taken along line 4-4 of Fig. 3.
Fig. 5 is an end view taken along line 5-5 of Fig. 3.
Fig. 6 is a cross-sectional view taken along line 6-6 of Fig. 3.
Fig. 7 is a top view showing a fiber-reinforced composite material according to a first modification.
Fig. 8 is an explanatory top view showing a method for manufacturing a fiber structure according to a second modification.

### DESCRIPTION OF EMBODIMENTS

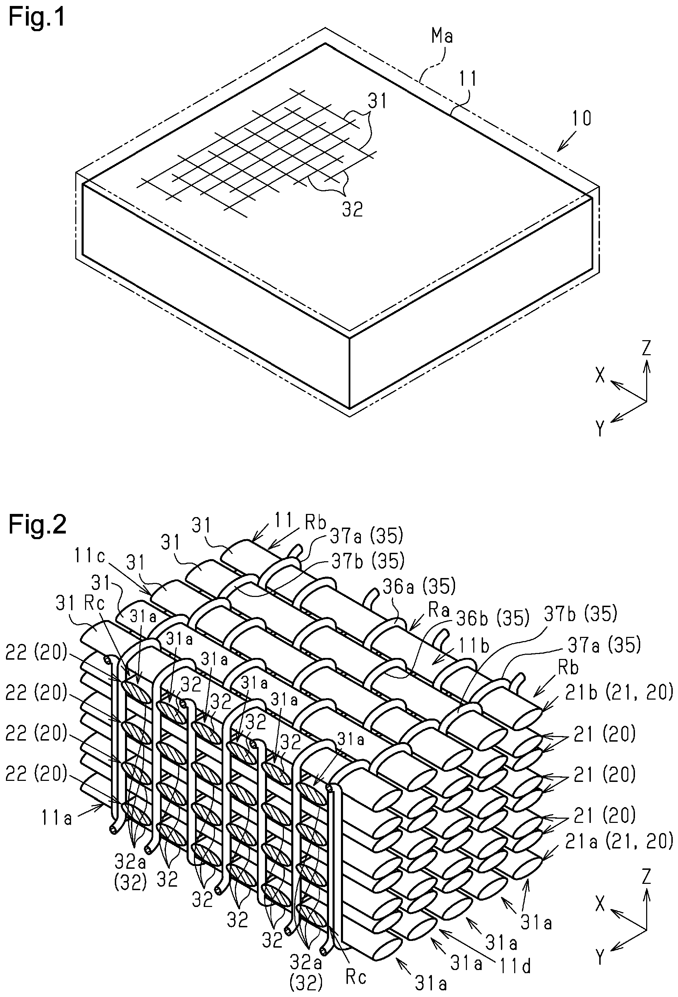

A fiber structure and a fiber-reinforced composite material according to an embodiment will now be described with reference to Figs. 1 to 6.

### Fiber Reinforced Composite

As shown in Fig. 1, a fiber-reinforced composite material 10 includes a fiber structure 11 and a matrix resin Ma as a matrix material impregnated into the fiber structure 11. The fiber structure 11 serves as a reinforcing substrate of the fiber-reinforced composite material 10. The matrix resin Ma is, for example, a thermosetting resin. Examples of the thermosetting resin include an epoxy resin, a vinyl ester resin, an unsaturated polyester resin, and a phenol resin. For example, the fiber-reinforced composite material 10 is formed by impregnating the fiber structure 11 with a thermosetting resin using a resin transfer molding (RTM) method.

### Fiber Structure

As shown in Fig. 2, the fiber structure 11 includes multiple fiber layers 20. The fiber layers 20 are stacked in a stacking direction Z. The fiber structure 11 does not change in configuration before and after thermal curing of the matrix material.

In the following description, the fiber structure 11 is described as being placed horizontally. In the drawings, directions along a horizontal plane are indicated by an X-axis and a Y-axis, and a direction orthogonal to the horizontal plane is indicated by a Z-axis. The X-axis, the Y-axis, and the Z-axis are orthogonal to each other. A direction parallel to the X-axis is also referred to as a first direction X. A direction parallel to the Y-axis is also referred to as a second direction Y. The second direction Y is a direction orthogonal to the first direction X. The stacking direction Z is a direction parallel to the Z-axis.

The fiber layers 20 include multiple first yarn layers 21 and one or more (multiple in this example) second yarn layers 22. The first yarn layers 21 and the second yarn layers 22 are stacked in the stacking direction Z. Each first yarn layer 21 includes multiple first yarns 31, and the first yarns 31 are arranged in the second direction Y. The first yarns 31 each have a yarn main axis extending in the first direction X. Each second yarn layer 22 includes multiple second yarns 32, and the second yarns 32 are arranged in the first direction X. The second yarns 32 each have a yarn main axis extending in the second direction Y.

Each of the first yarns 31 and the second yarns 32 is, for example, a fiber bundle in which multiple reinforcing continuous fibers are bundled. The reinforcing fibers may be organic fibers or inorganic fibers. Instead, the reinforcing fibers may be mixed fibers in which different types of organic fibers, different types of inorganic fibers, or organic fibers and inorganic fibers are mixed. Examples of the organic fibers include acrylic fibers, nylon fibers, polyester fibers, aramid fibers, poly-p-phenylenebenzobisoxazole fibers, and ultra-high-molecular weight polyethylene fibers. Examples of the inorganic fibers include carbon fibers, glass fibers, and ceramic fibers. The first yarns 31 and the second yarns 32 of the present embodiment are made of carbon fibers.

One of the first yarn layers 21 is located at each of the opposite ends of the fiber structure 11 in the stacking direction Z. Specifically, one of the multiple first yarn layers 21 is located at an end 11a, which is one end (lower end in Fig. 2) of the fiber structure 11 in the stacking direction Z. Another of the first yarn layers 21 is located at an end 11b, which is the other end (upper end in Fig. 2) of the fiber structure 11 in the stacking direction Z. The first yarn layer 21 located at the end 11a of the fiber structure 11 is also referred to as a first end layer 21a. The first yarn layer 21 located at the end 11b of the fiber structure 11 is also referred to as a second end layer 21b.

Each second yarn layer 22 is located between the corresponding first yarn layers 21 in the stacking direction Z. Each of the first end layer 21a and the second end layer 21b is adjacent to one of the second yarn layers 22 in the stacking direction Z. Two of the first yarn layers 21 are located between the corresponding second yarn layers 22 in the stacking direction Z. One second yarn layer 22 and two first yarn layers 21 are alternately stacked in that order in the stacking direction Z between the first end layer 21a and the second end layer 21b. In this manner, the multiple first yarn layers 21 and the multiple second yarn layers 22 are stacked in the stacking direction Z, so that the multiple fiber layers 20 are stacked in the stacking direction Z.

The first yarns 31 extend linearly in the first direction X. The first yarn layers 21 are stacked such that the first yarns 31 are arranged in the stacking direction Z. The first yarns 31 arranged in the stacking direction Z are collectively referred to as a first yarn group 31a. Multiple first yarn groups 31a are arranged in the second direction Y.

The second yarns 32 do not interlace with the first yarns 31. In each of one first yarn layer 21 and the corresponding second yarn layer 22 adjacent to each other in the stacking direction Z, each second yarn 32 in the second yarn layer 22 extends linearly in the second direction Y across the first yarns 31 in the first yarn layer 21.

The fiber structure 11 includes a central region Ra and two end regions Rb. The central region Ra includes a center of the fiber structure 11 in the first direction X. Each of the end regions Rb is adjacent to the central region Ra in the first direction X. The two end regions Rb include ends 11c and 11d of the fiber structure 11 in the first direction X, respectively.

Each second yarn layer 22 includes multiple end second yarns 32a. The end second yarns 32a are the second yarns 32 located at ends Rc of the central region Ra in the first direction X. Among the multiple second yarns 32 in each second yarn layer 22, the second yarn 32 located at one end in the first direction X and the second yarn 32 located at the other end correspond to the end second yarns 32a. The end second yarns 32a are located at the opposite ends of the central region Ra in the first direction X. The central region Ra includes the end second yarns 32a located at the opposite ends in the first direction X, and multiple second yarns 32 located between the end second yarns 32a at one end in the first direction X and the end second yarns 32a at the other end.

The end regions Rb are regions of the fiber structure 11 located outside the end second yarns 32a in the first direction X. In each of the multiple first yarn layers 21, the opposite ends of the first yarns 31 protrude beyond the end second yarns 32a toward the outside of the fiber structure 11. Each end region Rb thus includes the ends of the first yarns 31 protruding beyond the end second yarns 32a. The parts of the first yarns 31 other than the parts located in the end regions Rb are located in the central region Ra.

### Interlayer Binding Yarns

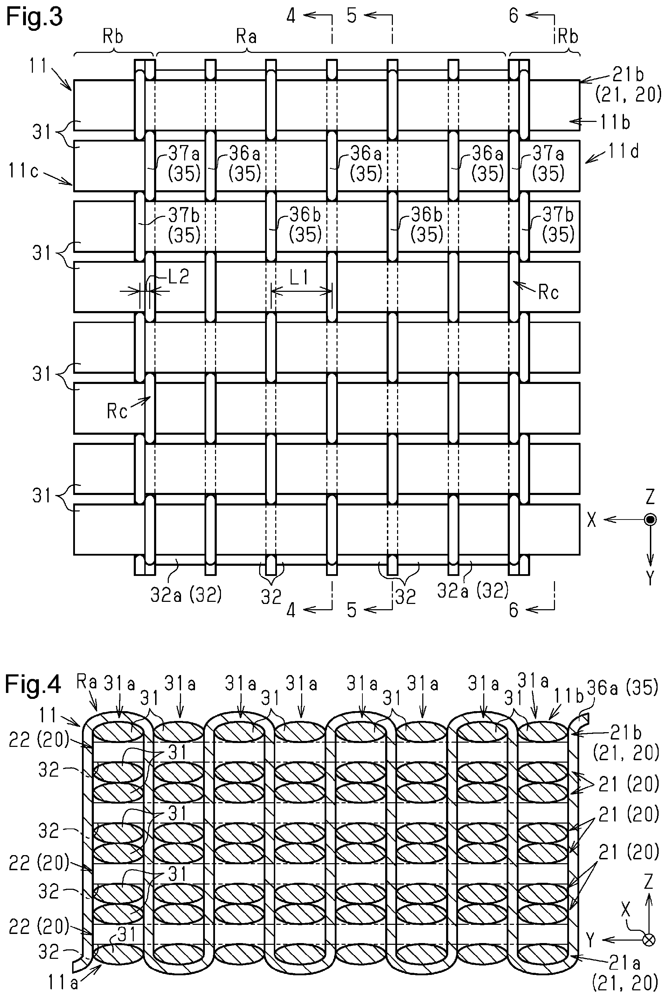

As shown in Figs. 2 and 3, the fiber structure 11 includes multiple interlayer binding yarns 35 that bind the multiple fiber layers 20 in the stacking direction Z. Each of the interlayer binding yarns 35 is, for example, a fiber bundle in which multiple reinforcing continuous fibers are bundled. The interlayer binding yarns 35 are included in the fiber structure 11 by binding the multiple fiber layers 20 with the interlayer binding yarns 35 in the weaving process used to produce the fiber structure 11.

The interlayer binding yarns 35 are adjacent to the second yarns 32 in the first direction X. The interlayer binding yarns 35 each have a yarn main axis extending in the second direction Y. The interlayer binding yarns 35 engage with the first yarns 31 in the first end layer 21a and the first yarns 31 in the second end layer 21b. In other words, the interlayer binding yarns 35 engage with the first yarns 31 of the first yarn layers 21 located at the opposite ends in the stacking direction Z of the multiple fiber layers 20.

Multiple interlayer binding yarns 35 are located in each of the central region Ra and the two end regions Rb. The interlayer binding yarns 35 located in the central region Ra include multiple first interlayer binding yarns 36a and multiple second interlayer binding yarns 36b. The first interlayer binding yarns 36a and the second interlayer binding yarns 36b are disposed alternately in the first direction X.

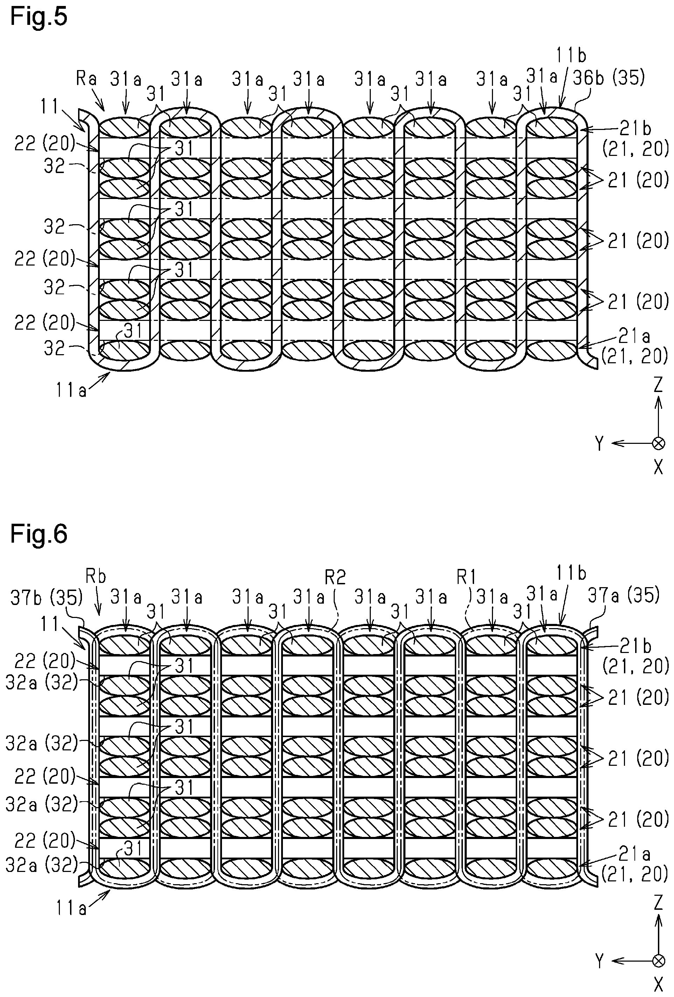

As shown in Figs. 4 and 5, each of the first interlayer binding yarns 36a and the second interlayer binding yarns 36b alternately engages with the first yarns 31 located in the first end layer 21a and the first yarns 31 located in the second end layer 21b, from one end to the other end in the second direction Y of the fiber structure 11. The first yarns 31 with which the first interlayer binding yarns 36a are engaged in the first end layer 21a and the first yarns 31 with which the first interlayer binding yarns 36a are engaged in the second end layer 21b are located in the first yarn groups 31a adjacent to each other in the second direction Y. Similarly, the first yarns 31 with which the second interlayer binding yarns 36b are engaged in the first end layer 21a and the first yarns 31 with which the second interlayer binding yarns 36b are engaged in the second end layer 21b are located in the first yarn groups 31a adjacent to each other in the second direction Y. Each of the first interlayer binding yarns 36a and the second interlayer binding yarns 36b extends in the second direction Y, alternating the engaged first yarn 31 between the first yarn 31 in the first end layer 21a and the first yarn 31 in the second end layer 21b for each first yarn group 31a. Each of the first interlayer binding yarns 36a and the second interlayer binding yarns 36b extends in the stacking direction Z between any two of the first yarn groups 31a adjacent to each other in the second direction Y.

The first interlayer binding yarns 36a and the second interlayer binding yarns 36b pass through mutually different paths in a cross section of the fiber structure 11 orthogonal to the first direction X, so as to interlace with the first yarns 31. Each first interlayer binding yarn 36a alternately engages with the first yarn 31 located in the first end layer 21a and the first yarn 31 located in the second end layer 21b, from one end to the other end of the fiber structure 11 in the second direction Y. Each second interlayer binding yarn 36b alternately engages with the first yarn 31 located in the second end layer 21b and the first yarn 31 located in the first end layer 21a, from one end to the other end of the fiber structure 11 in the second direction Y. In a first yarn group 31a in which the first interlayer binding yarn 36a engages with the first yarn 31 located in the first end layer 21a, the second interlayer binding yarn 36b engages with the first yarn 31 located in the second end layer 21b. In a first yarn group 31a in which the first interlayer binding yarn 36a engages with the first yarn 31 located in the second end layer 21b, the second interlayer binding yarn 36b engages with the first yarn 31 located in the first end layer 21a.

As shown in Fig. 3, the interlayer binding yarns 35 located in each end region Rb include a first end interlayer binding yarn 37a and a second end interlayer binding yarn 37b. The first end interlayer binding yarn 37a and the second end interlayer binding yarn 37b are adjacent to each other in the first direction X. One first end interlayer binding yarn 37a is located in the end region Rb at each of the ends 11c and 11d of the fiber structure 11. One second end interlayer binding yarn 37b is located in the end region Rb at each of the ends 11c and 11d of the fiber structure 11.

The first end interlayer binding yarns 37a and the second end interlayer binding yarns 37b are thinner than the second yarns 32. In other words, the multiple interlayer binding yarns 35 located in each end region Rb are thinner than the second yarns 32. All the interlayer binding yarns 35 provided in the fiber structure 11 may have the same thickness. In this case, the first interlayer binding yarns 36a and the second interlayer binding yarns 36b, which are the interlayer binding yarns 35 located in the central region Ra, are also thinner than the second yarns 32.

The second end interlayer binding yarns 37b are the interlayer binding yarns 35 located at the endmost positions in the first direction X among the interlayer binding yarns 35 provided in the fiber structure 11. In other words, the interlayer binding yarns 35 located in the end regions Rb include the interlayer binding yarns 35 located at the endmost positions in the first direction X among the interlayer binding yarns 35 provided in the fiber structure 11.

As shown in Fig. 6, each of the first end interlayer binding yarn 37a and the second end interlayer binding yarn 37b alternately engages with the first yarn 31 located in the first end layer 21a and the first yarn 31 located in the second end layer 21b from one end to the other end of the fiber structure 11 in the second direction Y. The first yarns 31 with which the first end interlayer binding yarn 37a is engaged in the first end layer 21a and the first yarns 31 with which the first end interlayer binding yarn 37a is engaged in the second end layer 21b are located in the first yarn groups 31a adjacent to each other in the second direction Y. Similarly, the first yarns 31 with which the second end interlayer binding yarn 37b is engaged in the first end layer 21a and the first yarns 31 with which the second end interlayer binding yarn 37b is engaged in the second end layer 21b are located in the first yarn groups 31a adjacent to each other in the second direction Y. Each of the first end interlayer binding yarn 37a and the second end interlayer binding yarn 37b extends in the second direction Y, alternating the engaged first yarn 31 between the first yarn 31 in the first end layer 21a and the first yarn 31 in the second end layer 21b for each first yarn group 31a. Each of the first end interlayer binding yarn 37a and the second end interlayer binding yarn 37b extends in the stacking direction Z between any two of the first yarn groups 31a adjacent to each other in the second direction Y.

The first end interlayer binding yarn 37a and the second end interlayer binding yarn 37b pass through mutually different paths in a cross section of the fiber structure 11 orthogonal to the first direction X, so as to interlace with the first yarns 31. The first end interlayer binding yarn 37a alternately engages with the first yarn 31 located in the first end layer 21a and the first yarn 31 located in the second end layer 21b, from one end to the other end of the fiber structure 11 in the second direction Y. The second end interlayer binding yarn 37b alternately engages with the first yarn 31 located in the second end layer 21b and the first yarn 31 located in the first end layer 21a, from one end to the other end of the fiber structure 11 in the second direction Y. In a first yarn group 31a in which the first end interlayer binding yarn 37a engages with the first yarn 31 located in the first end layer 21a, the second end interlayer binding yarn 37b engages with the first yarn 31 located in the second end layer 21b. In a first yarn group 31a in which the first end interlayer binding yarn 37a engages with the first yarn 31 located in the second end layer 21b, the second end interlayer binding yarn 37b engages with the first yarn 31 located in the first end layer 21a.

In Fig. 6, a path through which each first interlayer binding yarn 36a passes is schematically shown as a first path R1 indicated by a long-dash double-short-dash line, and a path through which each second interlayer binding yarn 36b passes is schematically shown as a second path R2 indicated by a long-dash short-dash line. In a cross section of the fiber structure 11 orthogonal to the first direction X, the first end interlayer binding yarn 37a passes through the first path R1, and the second end interlayer binding yarn 37b passes through the second path R2. Therefore, the first end interlayer binding yarn 37a, which is the interlayer binding yarn 35 located in each end region Rb, passes through the same first path R1 as the first interlayer binding yarn 36a in the cross section of the fiber structure 11 orthogonal to the first direction X, so as to interlace with the first yarns 31. The second end interlayer binding yarn 37b, which is the other interlayer binding yarn 35, passes through the same second path R2 as the second interlayer binding yarn 36b in the cross section of the fiber structure 11 orthogonal to the first direction X, so as to interlace with the first yarns 31.

### Pitches

As shown in Fig. 3, a pitch between the first interlayer binding yarn 36a and the second interlayer binding yarn 36b, which are adjacent to each other in the first direction X, is referred to as a first pitch L1. In the central region Ra, the interlayer binding yarns 35 are separated from each other in the first direction X.

A pitch between the first end interlayer binding yarn 37a and the second end interlayer binding yarn 37b, which are adjacent to each other in the first direction X, is referred to as a second pitch L2. The first end interlayer binding yarn 37a and the second end interlayer binding yarn 37b, which are adjacent to each other in the first direction X, are in contact with each other in the first direction X. Therefore, the second pitch L2, which is the pitch in the first direction X between the interlayer binding yarns 35 in each end region Rb, is smaller than the first pitch L1, which is the pitch in the first direction X between the interlayer binding yarns 35 in the central region Ra.

### Operation

Operation of the present embodiment will now be described.

The first interlayer binding yarns 36a and the second interlayer binding yarns 36b, which are located in the central region Ra, pass through mutually different paths in a cross section of the fiber structure 11 orthogonal to the first direction X, so as to interlace with the first yarns 31. Thus, the parts of the first yarns 31 located in the central region Ra are engaged with the first interlayer binding yarns 36a and the second interlayer binding yarns 36b from the opposite sides in the stacking direction Z. The engagement of the interlayer binding yarns 35 in the central region Ra allows the second yarns 32 located in the central region Ra in the first direction X to be supported by being sandwiched from the opposite sides in the stacking direction Z by the first yarns 31 adjacent to the second yarns 32 in the stacking direction Z. Thus, the parts of the fiber layers 20 located in the central region Ra are bound together by the first interlayer binding yarns 36a and the second interlayer binding yarns 36b.

The first end interlayer binding yarn 37a and the second end interlayer binding yarn 37b located in each end region Rb interlace with the first yarns 31 through mutually different paths in a cross section of the fiber structure 11 orthogonal to the first direction X. Thus, parts of the first yarns 31 located in each end region Rb are engaged with the first end interlayer binding yarn 37a and the second end interlayer binding yarn 37b from the opposite sides in the stacking direction Z. The engagement of the interlayer binding yarns 35 in each end region Rb allows the end second yarns 32a adjacent to the end region Rb in the first direction X to be supported to be sandwiched from the opposite sides in the stacking direction Z by the first yarns 31 adjacent to the end second yarns 32a in the stacking direction Z. Thus, the parts of the fiber layers 20 located in each end region Rb are bound together by the first end interlayer binding yarn 37a and the second end interlayer binding yarns 37b.

The second pitch L2, which is the pitch between the first end interlayer binding yarn 37a and the second end interlayer binding yarn 37b in each end region Rb, is smaller than the first pitch L1, which is the pitch between the first interlayer binding yarn 36a and the second interlayer binding yarn 36b in the central region Ra. Therefore, the fiber layers 20 are more firmly bound together by the interlayer binding yarns 35 in each end region Rb than in the central region Ra. Such engagement of the interlayer binding yarns 35 in each end region Rb allows the end second yarns 32a to be more strongly sandwiched from the opposite sides in the stacking direction Z by the first yarns 31 adjacent in the stacking direction Z than the other second yarns 32 located in the central region Ra.

### Advantages

The above-described embodiment has the following advantages.

(1-1) The pitch in the first direction X between the interlayer binding yarns 35 in each end region Rb is smaller than the pitch in the first direction X between the interlayer binding yarns 35 in the central region Ra. Therefore, the fiber layers 20 are more firmly bound together by the interlayer binding yarns 35 in each end region Rb than in the central region Ra. The end second yarns 32a, which are the second yarns 32 located at the ends Rc of the central region Ra in the first direction X, are less likely to fray from the ends 11c, 11d of the fiber structure 11 in the first direction X due to the interlayer binding yarns 35 in the end regions Rb. Further, since such fraying is suppressed by binding the fiber layers 20 with the interlayer binding yarns 35 in the weaving step, it is not necessary to add a step other than the weaving step in order to suppress fraying. Therefore, fraying from the ends 11c, 11d of the fiber structure 11 is suppressed while also preventing an increase in the manufacturing steps required for the fiber structure 11.

(1-2) Some of the interlayer binding yarns 35 located in each end region Rb pass through the same first path R1 as the first interlayer binding yarns 36a in a cross section of the fiber structure 11 orthogonal to the first direction X, so as to interlace with the first yarns 31. The other interlayer binding yarns 35 pass through the same second path R2 as the second interlayer binding yarn 36b in the cross section of the fiber structure 11 orthogonal to the first direction X, so as to interlace with the first yarns 31. Therefore, the interlayer binding yarns 35 located in the central region Ra and the interlayer binding yarns 35 located in the end regions Rb share common paths in the cross section of the fiber structure 11 orthogonal to the first direction X. This facilitates the manufacture of the fiber structure 11.

(1-3) The interlayer binding yarns 35 located in each end region Rb are thinner than the second yarns 32. Thus, as compared with a case in which the interlayer binding yarns 35 located in each end region Rb are thicker than the second yarns 32, meandering of the first yarns 31 due to engagement of the interlayer binding yarns 35 is less likely to occur. This limits a decrease in the strength of the fiber structure 11 caused by meandering of the first yarns 31.

(1-4) Fraying from the ends 11c, 11d of the fiber structure 11 in the first direction X can also be prevented by forming interlacing yarns at the ends 11c, 11d of the fiber structure 11. However, this approach requires additional tools specifically for forming the interlacing yarns. According to the above-described embodiment, the interlayer binding yarns 35 located in the central region Ra and the interlayer binding yarns 35 located in the end regions Rb share common paths in the cross section of the fiber structure 11 orthogonal to the first direction X. Consequently, there is no need to increase the number of tools for the interlayer binding yarns 35 in the end regions Rb. This prevents fraying from the ends 11c, 11d of the fiber structure 11 while also minimizing the increase in the number of tools used in the weaving process.

### Modifications

The above-described embodiment may be modified as follows. The above-described embodiment and the following modifications can be combined as long as the combined modifications remain technically consistent with each other.

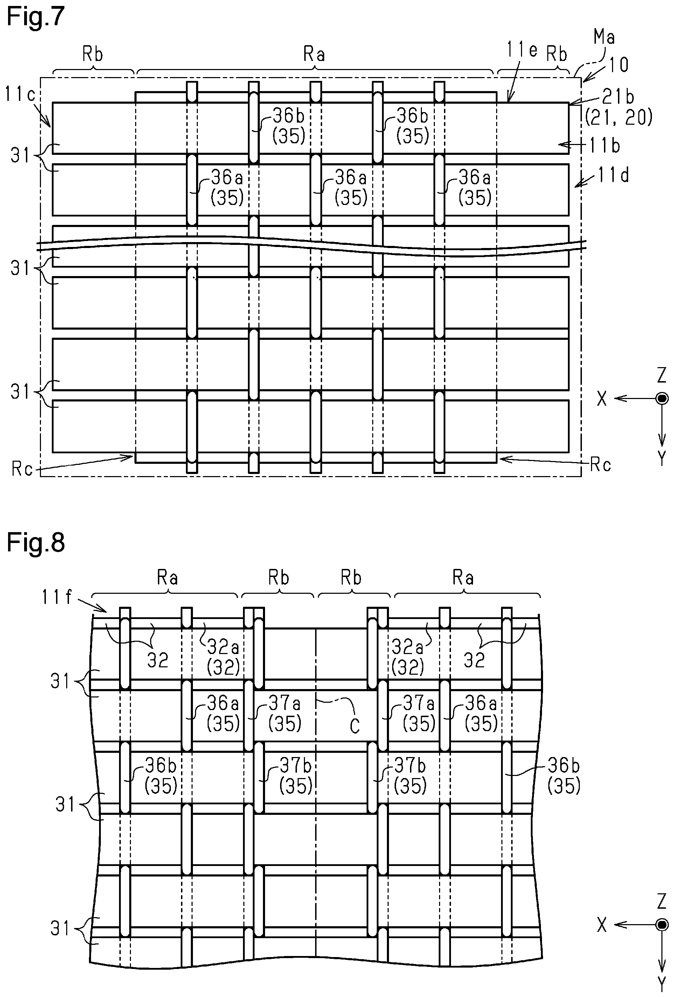

As in a first modification shown in Fig. 7, the interlayer binding yarns 35 located in each end region Rb may be melted by impregnating the fiber structure 11 with the matrix resin Ma as a thermosetting resin by using the RTM method. In this case, for example, a resin having a property of melting at the curing temperature of the matrix resin Ma can be used as the material of the interlayer binding yarns 35 located in the end regions Rb. When an epoxy resin is used as the matrix resin Ma, for example, a phenoxy resin, a methyl methacrylate resin, or the like can be used as the material of the interlayer binding yarns 35 located in the end regions Rb. When the fiber structure 11 is heated by the RTM method, the matrix resin Ma impregnated into the fiber structure 11 is thermally cured. At the same time, the interlayer binding yarns 35 located in the end regions Rb disappear from the fiber structure 11. As a result, as shown in Fig. 7, a fiber structure 11e in which the interlayer binding yarns 35 are not present in the end regions Rb is obtained. In this modification, the fiber structure 11e serves as the reinforcing substrate of the fiber-reinforced composite material 10.

### The first modification has the following advantages.

(2-1) The interlayer binding yarns 35 located in the end regions Rb are melted by impregnating the fiber structure 11 with the thermosetting resin using the RTM method. Even if the first yarns 31 meander due to the engagement of the interlayer binding yarns 35 in the end regions Rb, the meandering of the first yarns 31 is eliminated since the interlayer binding yarns 35 located in the end regions Rb are melted by impregnating the fiber structure 11 with the thermosetting resin using the RTM method. This limits a decrease in the strength of the fiber structure 11 caused by meandering of the first yarns 31.

As in a second modification shown in Fig. 8, fiber structures 11 may be manufactured by cutting a fiber body 11f, which is a precursor of the fiber structures 11. The fiber body 11f in this case has the first yarns 31, the second yarns 32, and the interlayer binding yarns 35 similar to those of the fiber structure 11. In the fiber body 11f, central regions Ra and end regions Rb are arranged in the first direction X. Two end regions Rb are adjacent to each other in the first direction X between the central regions Ra in the first direction X. The first yarns 31 of the end regions Rb adjacent to each other in the first direction X are continuous. The first yarns 31 extend in the first direction X between the opposite ends of the fiber body 11f in the first direction X. After the fiber body 11f is manufactured, the fiber body 11f is cut along a cutting position C indicated by the long-dash short-dash line in Fig. 8. Accordingly, since the fiber body 11f is cut between the end regions Rb adjacent to each other in the first direction X, the fiber structures 11 are manufactured from the fiber body 11f.

In the fiber structure 11, the number of the first yarn layers 21 located between the second yarn layers 22 in the stacking direction Z may be one or three or more.

The second yarns 32 may be located in each end region Rb. In this case as well, fraying of the end second yarns 32a from the ends 11c, 11d of the fiber structure 11 in the first direction X is suppressed by the interlayer binding yarns 35 in the end portion regions Rb.

In a cross section of the fiber structure 11 orthogonal to the first direction X, the first interlayer binding yarns 36a may pass through a path different from the first path R1. In a cross section of the fiber structure 11 orthogonal to the first direction X, the second interlayer binding yarns 36b may pass through a path different from the second path R2. In summary, the paths of the first interlayer binding yarns 36a and the second interlayer binding yarns 36b may be changed as long as they pass through mutually different paths in a cross section of the fiber structure 11 orthogonal to the first direction X and interlace with the first yarns 31.

In a cross section of the fiber structure 11 orthogonal to the first direction X, the first end interlayer binding yarns 37a may pass through a path different from the first path R1. In a cross section of the fiber structure 11 orthogonal to the first direction X, the second end interlayer binding yarns 37b may pass through a path different from the second path R2. In summary, the interlayer binding yarns 35 located in the end regions Rb may pass through a path different from that of the interlayer binding yarns 35 located in the central region Ra in a cross section of the fiber structure 11 orthogonal to the first direction X.

The number of the interlayer binding yarns 35 located in each end region Rb may be three or more. For example, two or more first end interlayer binding yarns 37a may be located in each end region Rb. Two or more second end interlayer binding yarns 37b may be located in each end region Rb.

The fiber structure 11 may be provided with interlayer binding yarns 35 having different thicknesses. For example, the thickness of the interlayer binding yarns 35 located in the central region Ra may be different from the thickness of the interlayer binding yarns 35 located in the end regions Rb.

The thickness of the interlayer binding yarns 35 located in the central region Ra may be greater than or equal to the thickness of the second yarns 32.

The thickness of the interlayer binding yarns 35 located in the end regions Rb may be greater than or equal to the thickness of the second yarns 32.

In each end region Rb, the interlayer binding yarns 35 may be separated from each other in the first direction X. In this case also, the second pitch L2, which is the pitch in the first direction X between the interlayer binding yarns 35 in each end region Rb, is smaller than the first pitch L1, which is the pitch in the first direction X between the interlayer binding yarns 35 in the central region Ra.

The fiber structure 11 may be manufactured using first yarns 31 and second yarns 32 impregnated with the matrix resin Ma.

At least one of the first yarns 31, the second yarns 32, and the interlayer binding yarns 35 may be fiber bundles formed by bundling multiple non-reinforcing fibers. The phrase "at least one of" as used in this description means "one or more" of desired options. As an example, the expression "at least one" as used in this description means "only one option" or "both two options" if the number of options is two. In another example, the phrase "at least one of" as used in this description means "only one single option" or "any combination of two or more options" if the number of options is three or more.

## Claims

1. A fiber structure (11; 11e), comprising:
multiple fiber layers (20) stacked in a stacking direction (Z); and
multiple interlayer binding yarns (35) binding the multiple fiber layers (20) in the stacking direction (Z), wherein
the fiber layers (20) include multiple first yarn layers (21) and one or more second yarn layers (22) located between the first yarn layers (21) in the stacking direction (Z),
each of the first yarn layers (21) includes multiple first yarns (31) each having a yarn main axis extending in a first direction (X), the first yarns (31) being arranged in a second direction (Y) orthogonal to the first direction (X),
one of the first yarn layers (21) is located at each of opposite ends (11a, 11b) of the fiber structure (11; 11e) in the stacking direction (Z),
each of the second yarn layers (22) includes multiple second yarns (32) each having a yarn main axis extending in the second direction (Y), the second yarns (32) being arranged in the first direction (X) without interlacing with the first yarns (31),
each of the interlayer binding yarns (35) is adjacent to one of the second yarns (32) in the first direction (X), has a yarn main axis extending in the second direction (Y), and is engaged with the first yarns (31) of the first yarn layers (21) located at the opposite ends (11a, 11b) of the fiber structure (11; 11e) in the stacking direction (Z),
the fiber structure (11; 11e) further comprises:
a central region (Ra) including a center of the fiber structure (11; 11e) in the first direction (X); and
two end regions (Rb) respectively including opposite ends (11c, 11d) of the fiber structure (11; 11e) in the first direction (X), each of the end regions (Rb)being adjacent to the central region (Ra) in the first direction (X),
the second yarns (32) include multiple end second yarns (32a) located at an end (Rc) of the central region (Ra) in the first direction (X),
each of the second yarn layers (22) includes the end second yarns (32a),
each of the central region (Ra) and the two end regions (Rb) includes the interlayer binding yarns (35),
the interlayer binding yarns (35) located in each of the end regions (Rb) include:
the interlayer binding yarn (35) located at an endmost position in the first direction (X) among the interlayer binding yarns (35) included in the fiber structure (11; 11e), and
two of the interlayer binding yarns (35) that pass through mutually different paths (R1, R2) in a cross section of the fiber structure (11; 11e) orthogonal to the first direction (X), so as to interlace with the first yarns (31), **characterized by** a pitch (L2) in the first direction (X) between the interlayer binding yarns (35) in the end regions (Rb) is smaller than a pitch (L1) in the first direction (X) between the interlayer binding yarns (35) in the central region (Ra).

2. The fiber structure (11; 11e) according to claim 1, wherein
the interlayer binding yarns (35) located in the central region (Ra) include a first interlayer binding yarn (36a) and a second interlayer binding yarn (36b),
the first interlayer binding yarn (36a) and the second interlayer binding yarn (36b) pass through mutually different paths (R1, R2) in a cross section of the fiber structure (11; 11e) orthogonal to the first direction (X), so as to interlace with the first yarns (31), and
among the interlayer binding yarns (35) located in the end regions (Rb),
one or more of the interlayer binding yarns (37a) pass through the same path (R1) as the first interlayer binding yarn (36a) in a cross section of the fiber structure (11; 11e) orthogonal to the first direction (X), so as to interlace with the first yarns (31), and
other interlayer binding yarns (37b) pass through the same path as the second interlayer binding yarn (36b) in a cross section of the fiber structure (11; 11e) orthogonal to the first direction (X), so as to interlace with the first yarns (31).

3. The fiber structure (11; 11e) according to claim 1 or 2, wherein the interlayer binding yarns (35) located in the end regions (Rb) are thinner than the second yarns (32).

4. The fiber structure (11e) according to claim 1 or 2, wherein the interlayer binding yarns (35) located in the end regions (Rb) are melted by impregnating the fiber structure (11e) with a thermosetting resin (Ma) using an RTM method.

5. A fiber-reinforced composite material (10), comprising:
the fiber structure (11; 11e) according to claim 1 or 2; and
a matrix material (Ma) impregnated into the fiber structure (11; 11e).

## Patentansprüche

1. Faserstruktur (11; 11e), umfassend:
mehrere Faserschichten (20), die in einer Stapelrichtung (Z) gestapelt sind; und
mehrere Zwischenschichtbindegarne (35), die die mehreren Faserschichten (20) in der Stapelrichtung (Z) binden, wobei
die Faserschichten (20) mehrere erste Garnschichten (21) und eine oder mehrere zweite Garnschichten (22) aufweisen, die sich zwischen den ersten Garnschichten (21) in der Stapelrichtung (Z) befinden,
jede der ersten Garnschichten (21) mehrere erste Garne (31) aufweist, die jeweils eine Garnhauptachse haben, die sich in einer ersten Richtung (X) erstreckt, wobei die ersten Garne (31) in einer zweiten Richtung (Y) orthogonal zur ersten Richtung (X) angeordnet sind,
eine der ersten Garnschichten (21) sich an jedem der entgegengesetzten Enden (11a, 11b) der Faserstruktur (11; 11e) in der Stapelrichtung (Z) befindet,
jede der zweiten Garnschichten (22) mehrere zweite Garne (32) aufweist, die jeweils eine sich in der zweiten Richtung (Y) erstreckende Garnhauptachse haben, wobei die zweiten Garne (32) in der ersten Richtung (X) angeordnet sind, ohne sich mit den ersten Garnen (31) zu verschlingen,
jedes der Zwischenschichtbindegarne (35) an eines der zweiten Garne (32) in der ersten Richtung (X) angrenzt, eine sich in der zweiten Richtung (Y) erstreckende Garnhauptachse hat und mit den ersten Garnen (31) der ersten Garnschichten (21), die sich an den entgegengesetzten Enden (11a, 11b) der Faserstruktur (11; 11e) befinden, in der Stapelrichtung (Z) in Eingriff ist,
die Faserstruktur (11; 11e) ferner umfasst:
einen zentralen Bereich (Ra), der ein Zentrum der Faserstruktur (11; 11e) in der ersten Richtung (X) aufweist; und
zwei Endbereiche (Rb), die jeweils entgegengesetzte Enden (11c, 11d) der Faserstruktur (11; 11e) in der ersten Richtung (X) aufweisen, wobei jeder der Endbereiche (Rb) an den zentralen Bereich (Ra) in der ersten Richtung (X) angrenzt,
die zweiten Garne (32) mehrere endseitige zweite Garne (32a) aufweisen, die sich an einem Ende (Rc) des zentralen Bereichs (Ra) in der ersten Richtung (X) befinden,
jede der zweiten Garnschichten (22) die endseitigen zweiten Garne (32a) aufweist,
der mittlere Bereich (Ra) und die beiden Endbereiche (Rb) jeweils die Zwischenschichtbindegarne (35) aufweisen, wobei
die in jedem der Endbereiche (Rb) befindlichen Zwischenschichtbindegarne (35) aufweisen:
das Zwischenschichtbindegarn (35), das sich von den in der Faserstruktur (11; 11e) enthaltenen Zwischenschichtbindegarnen (35) an einer äußersten Position in der ersten Richtung (X) befindet, und
zwei der Zwischenschichtbindegarne (35), die in einem Querschnitt der Faserstruktur (11; 11e) orthogonal zur ersten Richtung (X) durch zueinander unterschiedliche Pfade (R1, R2) verlaufen, um sich mit den ersten Garnen (31) zu verschlingen, **gekennzeichnet durch**
einen Abstand (L2) in der ersten Richtung (X) zwischen den Zwischenschichtbindegarnen (35), der in den Endbereichen (Rb) kleiner ist als ein Abstand (L1) in der ersten Richtung (X) zwischen den Zwischenschichtbindegarnen (35) in dem zentralen Bereich (Ra).

2. Faserstruktur (11; 11e) gemäß Anspruch 1, wobei
die Zwischenschichtbindegarne (35), die sich in dem zentralen Bereich (Ra) befinden, ein erstes Zwischenschichtbindegarn (36a) und ein zweites Zwischenschichtbindegarn (36b) aufweisen,
das erste Zwischenschichtbindegarn (36a) und das zweite Zwischenschichtbindegarn (36b) durch zueinander unterschiedliche Pfade (R1, R2) in einem Querschnitt der Faserstruktur (11; 11e) orthogonal zu der ersten Richtung (X) verlaufen, um sich mit den ersten Garnen (31) zu verschlingen, und
von den in den Endbereichen (Rb) befindlichen Zwischenschichtbindegarnen (35),
ein oder mehrere der Zwischenschichtbindegarne (37a) denselben Pfad (R1) wie das erste Zwischenschichtbindegarn (36a) in einem Querschnitt der Faserstruktur (11; 11e) orthogonal zur ersten Richtung (X) durchlaufen, um sich mit den ersten Garnen (31) zu verschlingen, und
andere Zwischenschichtbindegarne (37b) denselben Pfad wie das zweite Zwischenschichtbindegarn (36b) in einem Querschnitt der Faserstruktur (11; 11e) orthogonal zu der ersten Richtung (X) durchlaufen, um sich mit den ersten Garnen (31) zu verschlingen.

3. Faserstruktur (11; 11e) gemäß Anspruch 1 oder 2, wobei die in den Endbereichen (Rb) befindlichen Zwischenschichtbindegarne (35) dünner sind als die zweiten Garne (32).

4. Faserstruktur (11e) gemäß Anspruch 1 oder 2, wobei die in den Endbereichen (Rb) befindlichen Zwischenschichtbindegarne (35) durch Imprägnieren der Faserstruktur (11e) mit einem duroplastischen Harz (Ma) unter Verwendung eines RTM-Verfahrens geschmolzen werden.

5. Faserverstärkter Verbundwerkstoff (10) umfassend:
die Faserstruktur (11; 11e) gemäß Anspruch 1 oder 2, und
ein Matrixmaterial (Ma), das in die Faserstruktur (11; 11e) imprägniert ist.

## Revendications

1. Structure de fibres (11 ; 11e), comprenant :
plusieurs couches de fibres (20) empilées dans une direction d'empilement (Z) ; et
plusieurs fils de liage inter-couches (35) liant les multiples couches de fibres (20) dans la direction d'empilement (Z), dans laquelle
les couches de fibres (20) comportent plusieurs couches de premiers fils (21) et une ou plus couches de deuxièmes fils (22) situées entre les couches de premiers fils (21) dans la direction d'empilage (Z),
chacune des couches de premiers fils (21) comporte plusieurs premiers fils (31) ayant chacun un axe principal de fil s'étendant dans une première direction (X), les premiers fils (31) étant disposés dans une deuxième direction (Y) orthogonale à la première direction (X),
une des couches de premiers fils (21) est située à chacune des extrémités opposées (11a, 11b) de la structure de fibres (11 ; 11e) dans la direction d'empilage (Z),
chacune des couches de deuxièmes fils (22) comporte plusieurs deuxièmes fils (32) ayant chacun un axe principal de fil s'étendant dans la deuxième direction (Y), les deuxièmes fils (32) étant disposés dans la première direction (X) sans s'entrelacer avec les premiers fils (31),
chacun des fils de liage inter-couches (35) est adjacent à l'un des deuxièmes fils (32) dans la première direction (X), a un axe principal de fil s'étendant dans la deuxième direction (Y) et est engagé avec les premiers fils (31) des couches de premiers fils (21) situées aux extrémités opposées (11a, 11b) de la structure de fibres (11 ; 11e) dans la direction d'empilage (Z),
la structure de fibres (11 ; 11e) comprend en outre :
une région centrale (Ra) comportant un centre de la structure de fibres (11 ; 11e) dans la première direction (X) ; et
deux régions d'extrémité (Rb) comportant respectivement des extrémités opposées (11c, 11d) de la structure de fibres (11 ; 11e) dans la première direction (X), chacune des régions d'extrémité (Rb) étant adjacente à la région centrale (Ra) dans la première direction (X),
les deuxièmes fils (32) comportent plusieurs deuxièmes fils d'extrémité (32a) situés à une extrémité (Rc) de la région centrale (Ra) dans la première direction (X),
chacune des couches de deuxièmes fils (22) comporte les deuxièmes fils d'extrémité (32a),
la région centrale (Ra) et les deux régions d'extrémité (Rb) comportent chacune les fils de liage inter-couches (35),
les fils de liage inter-couches (35) situés dans chacune des régions d'extrémité (Rb) comportent :
le fil de liage inter-couches (35) situé à une position la plus extrême dans la première direction (X) parmi les fils de liage inter-couches (35) comportés dans la structure de fibres (11 ; 11e), et
deux des fils de liage inter-couches (35) qui passent à travers des trajets mutuellement différents (R1, R2) dans une section transversale de la structure de fibres (11 ; 11e) orthogonale à la première direction (X), de manière à s'entrelacer avec les premiers fils (31),
**caractérisé par**
un pas (L2) dans la première direction (X) entre les fils de liage inter-couches (35) dans les régions d'extrémité (Rb) qui est plus petit qu'un pas (L1) dans la première direction (X) entre les fils de liage inter-couches (35) dans la région centrale (Ra).

2. Structure de fibres (11 ; 11e) selon la revendication 1, dans laquelle
les fils de liage inter-couches (35) situés dans la région centrale (Ra) comportent un premier fil de liage inter-couches (36a) et un deuxième fil de liage inter-couches (36b),
le premier fil de liage inter-couches (36a) et le deuxième fil de liage inter-couches (36b) passent à travers des trajets mutuellement différents (R1, R2) dans une section transversale de la structure de fibres (11 ; 11e) orthogonale à la première direction (X), de manière à s'entrelacer avec les premiers fils (31), et
parmi les fils de liage inter-couches (35) situés dans les régions d'extrémité (Rb),
un ou plus des fils de liage inter-couches (37a) passent à travers le même trajet (R1) que le premier fil de liage inter-couches (36a) dans une section transversale de la structure de fibres (11 ; 11e) orthogonale à la première direction (X), de manière à s'entrelacer avec les premiers fils (31), et
autres fils de liage inter-couches (37b) passent à travers le même trajet que le deuxième fil de liage inter-couches (36b) dans une section transversale de la structure de fibre (11 ; 11e) orthogonale à la première direction (X), de manière à s'entrelacer avec les premiers fils (31).

3. Structure de fibres (11 ; 11e) selon la revendication 1 ou 2, dans laquelle les fils de liage inter-couches (35) situés dans les régions d'extrémité (Rb) sont plus fins que les deuxièmes fils (32).

4. Structure de fibres (11e) selon la revendication 1 ou 2, dans laquelle les fils de liage inter-couches (35) situés dans les régions d'extrémité (Rb) sont fondus par imprégnation de la structure de fibre (11e) avec une résine thermodurcissable (Ma) en utilisant un procédé RTM.

5. Matériau composite renforcé de fibres (10,) comprenant :
la structure de fibres (11 ; 11e) selon la revendication 1 ou 2, et
un matériau matriciel (Ma) imprégné dans la structure de fibres (11 ; 11e).
